Europäisches Patentamt

European Patent Office

Office européen des brevets

(19)

(11) Numéro de publication: **0 271 409 B1**

(12) **FASCICULE DE BREVET EUROPEEN**

(45) Date de publication du fascicule du brevet:
**22.11.90**

(21) Numéro de dépôt: **87402775.8**

(22) Date de dépôt: **07.12.87**

(51) Int. Cl.⁵: **D03D 41/00,** D03D 25/00,
B29C 67/14

(54) Procédé de fabrication de renforts polaires à l'aide de fils radiaux et de fils circonférentiels continus et machine à tisser pour la mise en oeuvre du procédé.

(30) Priorité: **08.12.86 FR 8617120**

(43) Date de publication de la demande:
**15.06.88 Bulletin 88/24**

(45) Mention de la délivrance du brevet:
**22.11.90 Bulletin 90/47**

(84) Etats contractants désignés:
**BE CH DE ES FR GB IT LI NL SE**

(56) Documents cités:
**FR-A- 2 490 687**
**US-A- 4 346 741**

(73) Titulaire: **AEROSPATIALE Société Nationale Industrielle, 37, Boulevard de Montmorency, F-75781 Paris Cédex 16(FR)**

(72) Inventeur: **Tisne, Jean-Louis, 4, allée Saint-Julien, F-33127 Martiguas(FR)**

(74) Mandataire: **Lepeudry-Gautherat, Thérèse et al, ARMENGAUD JEUNE CABINET LEPEUDRY 6, rue du Faubourg Saint Honoré, F-75008 Paris(FR)**

## Description

L'invention concerne un procédé de fabrication de renforts polaires notamment constitués de fibres de verre, kevlar, carbone ... préimprégnées ou non de résines thermoplastiques ou thermodurcissables et présentant des fils circonférentiels continus et des fils radiaux, ainsi qu'une machine à tisser pour la mise en oeuvre dudit procédé, et les renforts polaires obtenus à l'aide de ladite machine.

Dans le domaine des enveloppes de propulseurs bobinés qui sont comme on le sait soumis à des contraintes locales, il convient de renforcer les structures en particulier autour des zones polaires. Pour cela on peut poser dans la zone polaire des galettes constituées de fils enroulés en spirale ou renforcer le fond de la structure par un bobinage satellite ou polaire supplémentaire interrompu en partie cylindrique.

La terme "galette" désigne un renfort constitué de fils disposés seulement circonférentiellement par enroulement en spirale entre deux flasques.

Une autre technique consiste à réaliser un tel renfort avec un tissu "spiralé. Ce tissage est effectué sur un métier comportant un rouleau d'appel des fils de chaîne, conique, ce qui entraîne la formation d'un tissu qui s'enroule sur un cône ou sur sa forme développée en plan, la couronne. Les fils circonférentiels ne sont pas continus et un recouvrement est nécessaire pour passer par cisaillement entre couche, les efforts de traction dans les fils circonférentiels (voir par exemple FR-A 2 490 687).

On connaît par ailleurs une technique qui consiste à réaliser des disques tridimentionnels par enroulement de fils circonférentiels dans des couloirs ménagés par des baguettes en composite disposées radialement, puis en consolidant transversalement par des fils parallèles aux génératrices. Ou selon une autre technique on peut disposer les fils circonférentiels et radiaux dans des couloirs ménagés par des tiges disposées parallèlement aux génératrices, puis remplacer par "laçage" les tiges métalliques par des fils. Ces deux dernières solutions aboutissent à un produit trop épais pour convenir à des renforts polaires intégrés entre des couches bobinées.

Pour réaliser un renfort monocouche on a envisagé de faire des coutures sur un réseau de fils radiaux. Pour cela les fils radiaux sont disposés entre des picots supportés par un outillage et on vient coudre en spirale les fils circonférentiels. Le point de couture est tel que les fils de renfort disposés dans la canette de la machine à coudre sont liés aux circonférentiels par un fil de liage à très bas titre, en nylon par exemple. Or il s'avère que le piquage et la couture déplacent les fils radiaux ; il est par conséquent difficile de régler les paramètres comme la longueur des points ou la tension des fils pour obtenir un fil de renfort droit. D'autre part, le fil a tendance à bourrer le long du chemin de canette. De ce fait, cette technologie simple au premier abord nécessite une mise au point importante pour des résultats qui risquent de ne pas être satisfaisants, en particulier au niveau du positionnement des fils radiaux et de l'intégrité des fils circonférentiels.

Afin d'éviter les inconvénients inhérents à ces diverses techniques, l'invention se propose de réaliser un article textile par tissage sur fils et plus précisément des renforts polaires à l'aide de fils radiaux et de fils circonférentiels continus, par un procédé selon lequel on tend des fils radiaux entre un moyeu et alternativement l'un ou l'autre de deux flasques, superposés, ménageant ainsi un espace dans lequel le circonférentiel est bobiné, une inversion de chaque fil radial d'un flasque à l'autre étant assuré à chaque tour.

Un autre objet de la présente invention consiste donc en une machine à tisser des renforts polaires constitués de fils radiaux et de fils circonférentiels conti-continus pour la mise en oeuvre du procédé, machine qui comporte un ensemble rotatif à deux flasques parallèles monté sur bâti support et entraîne par un moteur selon laquelle les flasques sont deux plateaux délimitant entre eux une chambre de tissage, dont le plateau inférieur porte sur sa périphérie des doigts coulissant et dont le plateau supérieur porte des doigts fixes à l'aplomb des doigts coulissants, lesquels doigts occupant des positions où ils sont écartés les uns des autres dans au moins un secteur du bâti support et des positions en contact les uns avec les autres dans au moins un autre secteur du bâti support pour former des colonnes continues fermant la chambre de tissage.

Selon une caractéristique principale de l'invention, les doigts servent de support à des plaquettes d'accrochage de fils radiaux, et des moyens sont prévus sur la périphérie du bâti support pour assurer le déplacement des doigts coulissant perpendiculairement au plateau, et la déplacement des plaquettes sur lesdits doigts en fonction de leur position par rapport au bâti support.

Selon une autre caractéristique principale de l'invention, les moyens destinés à assurer le déplacement des doigts coulissants perpendiculairement au plateau sont constitués d'une rampe prévue sur le pourtour d'une couronne fixe solidaire du bâti support, et d'une tête solidaire de chaque doigt coulissant qui est engagée dans ladite rampe et commande le déplacement vertical des doigts en fonction de leur rotation par rapport audit bâti et l'on fait en sorte que la rampe soit horizontale en position basse selon un secteur déterminé du bâti support, soit horizontale en position haute selon un autre secteur disposé en face du premier, soit inclinée ascendante de la position basse vers la position haute selon un premier secteur intermédiaire, et soit inclinée descendante de la position haute vers la position basse selon un second secteur intermédiaire.

Selon une caractéristique particulière de l'invention, au moins une bague servant à l'accrochage des fils radiaux et circonférentiel, est prévue autour du manchon du plateau supérieur et tourne avec les plateaux, la bague étant composée de deux demi-bagues superposées fixées l'une à l'autre entre lesquelles sont pincés les fils radiaux et le fil circonférentiel ou présentant une face supérieure profilée ayant une certaine inclinaison correspondant à l'inclinaison du cône tissé recherché et coulissant le long du machon du plateau supérieur.

Selon une autre caractéristique de l'invention, le moyen destiné à assurer le déplacement des plaquettes sur les doigts est constitué d'une plaque verticale d'aiguillage, s'étendant selon un secteur du bâti support et fixé audit bâti extérieurement à la rampe et coopérant avec l'extrémité extérieure desdites plaquettes, ladite plaque d'aiguillage étant constituée, d'une partie inférieure dont la découpe supérieure présente deux pans légèrement inclinés vers le haut se rencontrant en un point central, d'une partie supérieure dont la découpe inférieure présente deux pans légèrement inclinés vers le bas, et de deux parties triangulaires latérales dont les côtés sont parallèles aux pans inclinés des parties inférieures et supérieures, ces parties étant légèrement écartés les unes des autres pour former deux échancrures qui partent d'une extrémité de la plaque pour aboutir à l'extrémité opposée après un croisement au point central, et forment des rainures de guidage pour les plaquettes.

D'autres caractéristiques particulières et avantages de l'invention apparaîtront à la lecture de la description qui va suivre d'exemples de réalisation faisant référence aux dessins annexés qui représentent :

Figure 1 : une vue schématique en coupe centrale de la machine.
Figure 2 : une vue du dessus de la machine.
Figure 3 : une vue développée en plan de l'aiguillage.
Figure 4 : une vue schématique en coupe centrale de la partie inférieure de la machine.
Figure 5 : une vue du dessus, à plus grande échelle d'une partie de la machine selon la figure 2.
Figures 6 et 10 : deux vues partielles de formes de tissages obtenus.
Figure 7 : une vue schématique en plan montrant le développé du mécanisme d'inversion.
Figure 8 et 9 : deux vues de tissus obtenus selon deux variantes de réalisation.
Figure 11 : une vue schématique partielle en coupe centrale d'une variante de réalisation de la machine.
Figure 12 : une vue partielle d'une forme de tissage particulière pouvant être obtenue avec la machine conforme à l'invention.

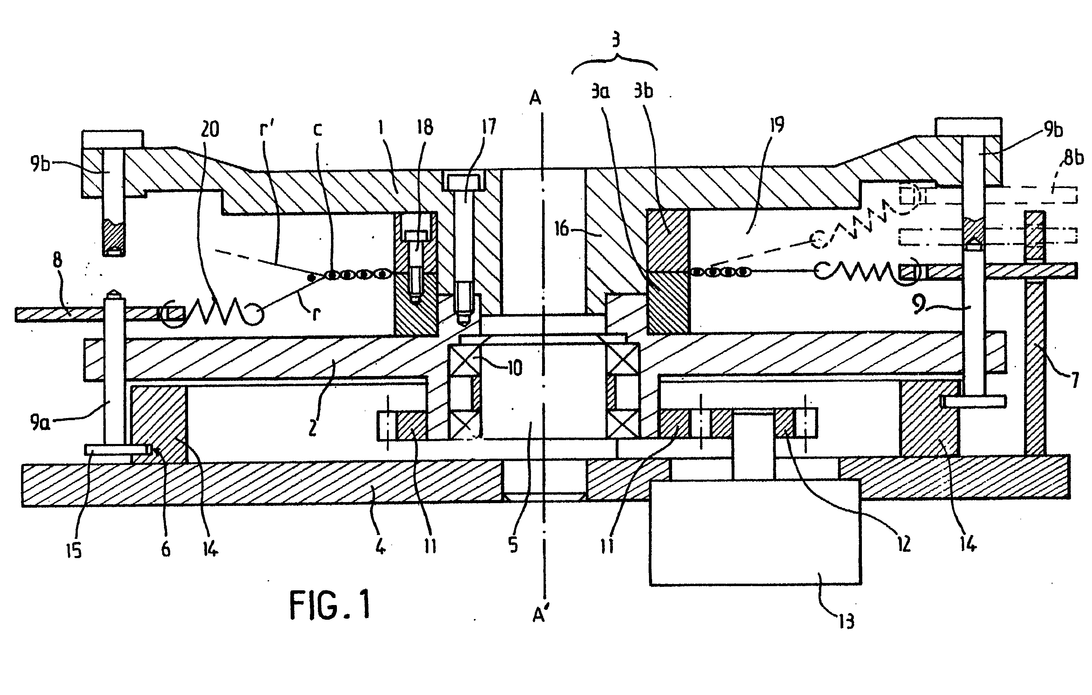

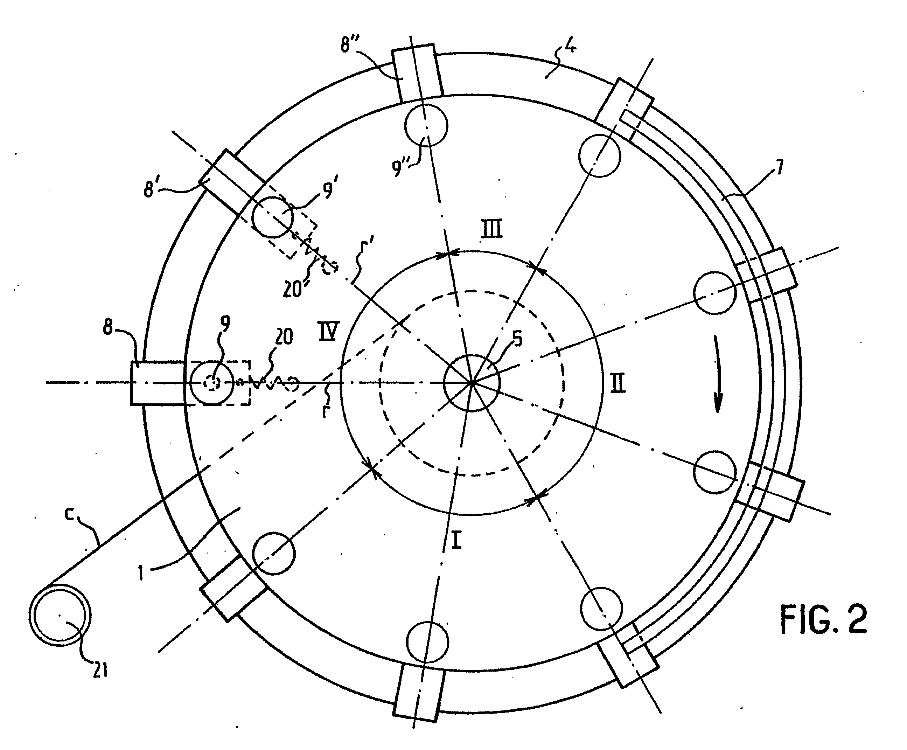

En se reportant plus précisément aux figures 1 et 2, on voit que la machine à tisser comprend essentiellement un bâti support 4 au-dessus duquel un plateau supérieur 1 et un plateau inférieur 2 sont montés parallèles l'un au-dessus de l'autre et constituent des flasques qui peuvent tourner autour d'un axe vertical AA'. Le plateau inférieur 2 repose sur un pivot de centrage 5 par l'intermédiaire de roulements 10. Une couronne dentée 11 solidaire du plateau engrène avec une poulie d'entaînement 12 mue par un moteur 13. Une courrone fixe 14, d'un diamètre légèrement inférieur à celui des plateaux est solidaire du bâti 4 et porte sur sa face externe et sur tout son pourtour une rampe 6. Le plateau inférieur 2 est percé sur sa périphérie et à intervalles réguliers d'orifices permettant le passage de doigts mobiles 9a qui coulissent verticalement et sont munis à leur extrémité inférieure de têtes 15 qui sont engagées dans la rampe 6 de la couronne 14.

Le plateau supérieur 1 a la forme d'un disque dont la partie centrale 16 en forme de manchon repose sur le plateau inférieur 2 auquel il est fixé par un jeu de vis 17. Une bague 3 elle-même composée de deux demi-bagues superposées 3a et 3b, entoure le manchon 16 entre les deux plateaux. Les deux demi-bagues sont également fixées l'une à l'autre par un jeu de vis 18.

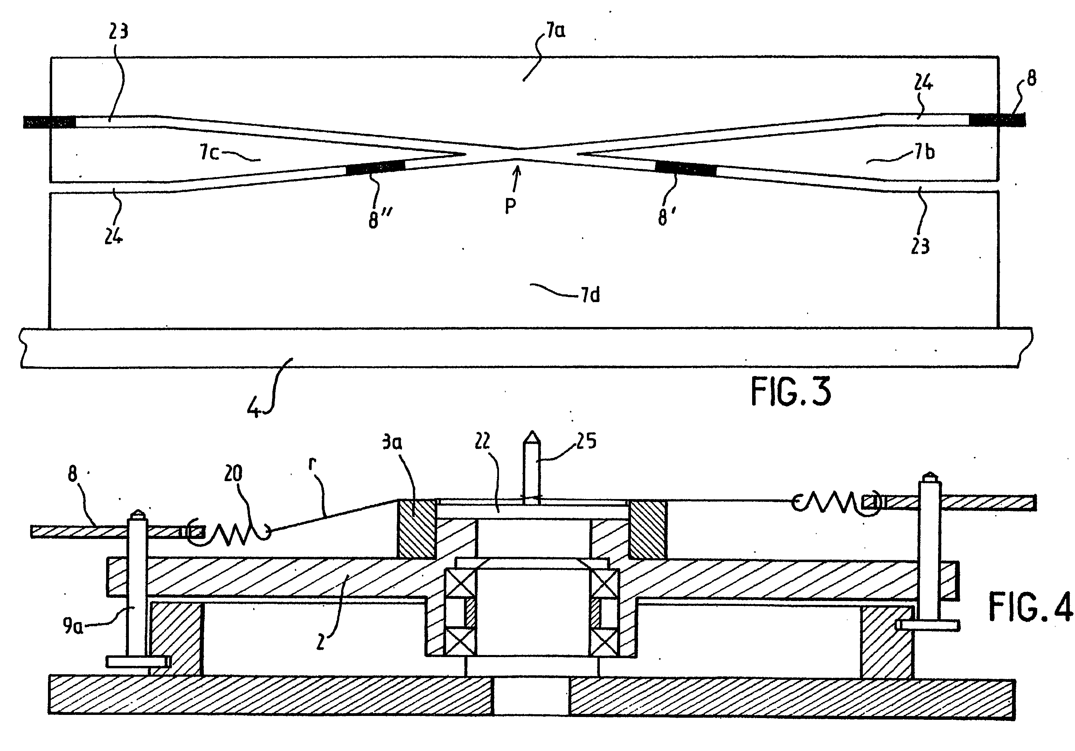

L'ensemble plateau-bague étant ainsi solidarisé est entraîné en rotation par le moteur 13. L'espace annulaire compris entre la face inférieure du plateau supérieur 1, le manchon 16, et la face supérieure du plateau inférieur 2 constitue la chambre de tissage 19 à l'intérieur de laquelle sont placés les fils à tisser. Des fils radiaux r sont pincés entre les deux bagues 3a et 3b et raccordés à des plaquettes périphériques 8 par l'intermédiaire de ressorts de tension 20 fixés à leurs extrémités. Ces plaquettes sont chacune munies d'un orifice grâce auquel elles sont emmanchées soit sur des doigts mobiles 9a du plateau inférieur 2 soit sur des doigts fixes 9b prévus à la périphérie du plateau supérieur 1, doigts qui sont orientés vers le bas, et se trouvent vis-à-vis des doigts mobiles 9a. Sur la périphérie du bâti support 4 et sur toute la longueur d'un secteur angulaire II est fixée une plaque verticale d'aiguillage 7 dont la structure est représentée en plan à la figure 3. Cette plaque est constituée d'abord d'une partie inférieure 7d dont la base est fixée au bâti 4 le long du secteur II et dont la découpe supérieure présente deux pans légèrement inclinés vers le haut se rencontrant en un point central P. La plaque 7 est constituée également d'une partie supérieure 7a dont la découpe inférieure présente deux pans légèrement inclinés vers le bas, et deux parties triangulaires latérales 7b et 7c dont les pointes sont orientées en direction du point P et dont les côtés sont parallèles aux pans inclinés des parties 7a et 7d. Les éléments 7a, 7b et 7c de la plaque 7 sont maintenus par des supports non représentés, dans la position de la figure 3. Ils sont écartes les uns des autres pour former avec l'élément 7d deux échancrures 23 et 24 qui partent d'une extrémité de la plaque 7 pour aboutir à l'extrémité opposée après un croisement au point central P. Ces échancrures forment des rainures de guidage pour l'extrémité des plaquettes 8. On remarque particulièrement à la figure 2 que le bâti support est divisé en quatre secteurs ; I, II, III, IV. Un fil circonférentiel c alimenté par une bobine 21 est également pincé entre les bagues 3a et 3b et pénètre dans la machine dans le secteur IV. On n'a représenté pour la clarté de la figure qu'un certain nombre de plaquettes 8, 8', 8", etc...

Préalablement à la mise en marche de la machine, il convient de mettre en place les fils radiaux. Cette opération a lieu avant de fixer le plateau supérieur 1 sur le plateau inférieur 2.

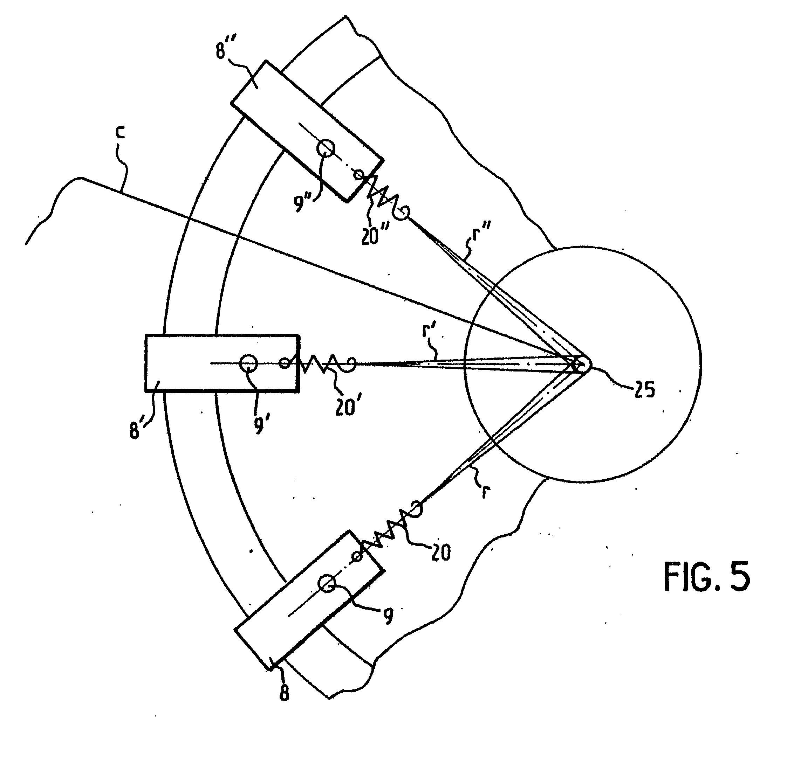

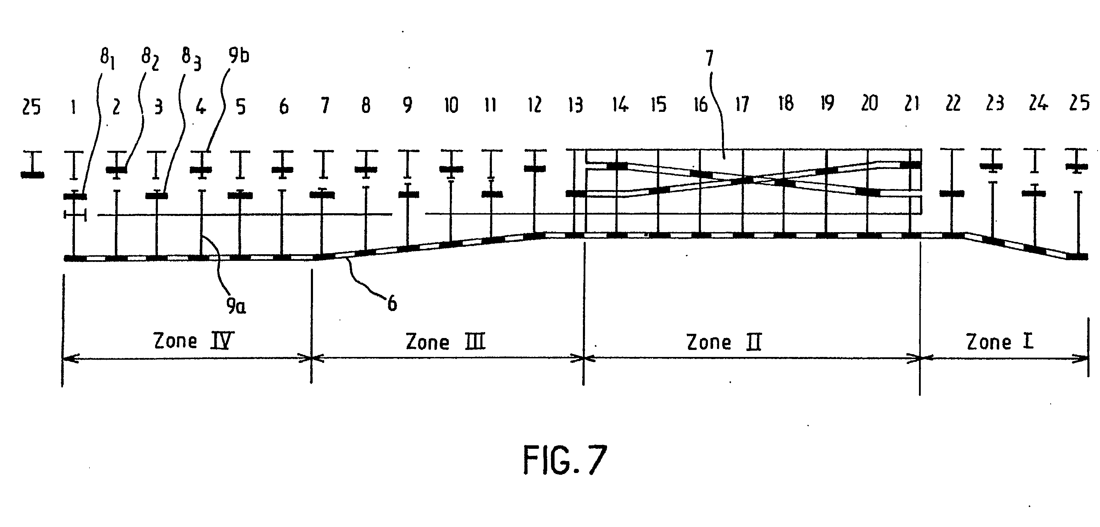

En se référant à la figure 4, on voit que la demi-bague 3a est en position sur le plateau inférieur 2. On dispose en appui sur ce plateau une pièce centrale 22 munie d'une pointe 25 placée en son centre et orientée vers le haut. Les fils radiaux r sont tendus entre la pointe 25 et le ressort 20 d'une plaquette 8 préalablement engagée sur un doigt 9a. Pour simplifier cette opération et permettre son automatisation, un fil continu peut, comme le montre la figure 5, être fixé sur la pointe, puis accroché au ressort 20, puis ramené vers la pointe 25 autour de laquelle il s'enroule avant de s'accrocher au ressort 20' de la plaquette voisine 8' et revenir vers la pointe... etc... jusqu'à ce que ledit fil r ait fait tout le tour du plateau. On a donc ainsi pour chaque plaquette 8, deux fils radiaux r menant vers le centre. Eventuellement pour faciliter cette opération la plaque 7 d'aiguillage est ôtée. Le fil circonférentiel c est également fixé à la pointe 25 et s'étend radialement en direction de la bobine 21.

Les fils étant ainsi tendus, on place la demi-bague supérieure 3b sur la demi-bague inférieure 3a que l'on serre à l'aide des vis 18. Les fils (r et c) se trouvent donc pincés par les bagues ce qui permet de les couper au diamètre intérieur de celles-ci. On ôte alors la pièce 22 et on peut ensuite rapporter le plateau supérieur 1 sur le plateau inférieur 2 auquel il est fixé par les vis 17 (figure 1). On positionne les plaquettes 8,8',8" alternativement sur les doigts 9a et les doigts 9b. La tension exercée par les ressorts 20 permet de les maintenir sur les doigts à la hauteur où la hauteur où ils ont été préalablement positionnés. Le fil circonférentiel c est alors placé tangentiellement au diamètre extérieur de la bague 3 et les plaques d'aiguillage 7 sont remontées sur le bâti 4.

La machine est prête à fonctionner. La rampe fixe 6 impose la hauteur des doigts mobiles 9a par l'intermédiaire des têtes 15. La figure 1 montre un doigt 9a, à gauche en position basse et à droite en position haute pour laquelle son extrémité vient en butée contre le doigt 9b correspondant, formant ainsi une colonne continue 9. La rampe 6 est horizontale en position basse dans la zone IV du bâti, horizontale en position haute dans la zone II en face de la zone IV, inclinée ascendante de la position basse vers la position haute dans la zone III, et inclinée descendante de la position haute vers la position basse dans la zone I.

Au moment du démarrage de la machine, le fil circonférentiel c est tendu entre la bobine 21 et les bagues 3 et se trouve engagé entre le fil r accroché à la plaquette 8 en position basse et le fil r' accroché à la plaquette 8' en position haute (voir figures 1 et 2). Quand le moteur 13 entraîne en rotation les plateaux 1 et 2, le fil circonférentiel c se déroule de la bobine 21 et s'enroule donc autour de deux fils radiaux voisins. Cette opération s'effectue dans la zone IV où les deux doigts 9a et 9b sont écartés, ce qui permet le passage du fil circonférentiel. Dans la zone III, la came 6 étant ascendante, les doigts 9a se relèvent sous l'action de leur tête 15. Dans la zone II les doigts 9a et 9b sont en butée et forment une colonne continue lisse sur laquelle les plaquettes 8 peuvent glisser de bas en haut et de haut en bas, leurs orifices étant prévus sur les doigts 9 avec un faible jeu. Dans cette zone lesdites plaquettes 8 attaquent les rainures de guidage 23 et 24 de l'aiguillage 7. On voit que les plaquettes arrivant en position haute sont déplacées vers une position basse et inversement les plaquettes arrivant en position basse sont déplacées vers une position haute. Les plaquettes hautes et basses étant décalées angulairement sur le plateau arriveront en position décalée au point P et le franchiront sans risque de heurt (figure 3). Le jeu entre les doigts et les plaquettes ou encore un trou oblong ménagé dans chaque plaquette, permettront à celles-ci de s'incliner dans la partie en pente de l'aiguillage.

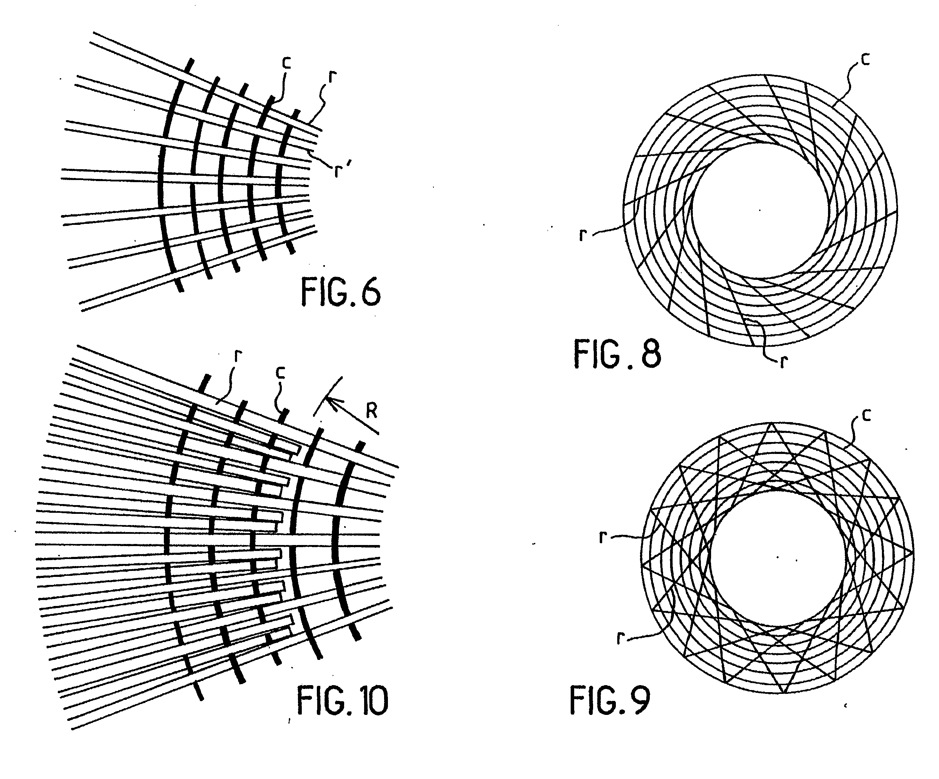

Cette inverstion des plaquettes entraîne une inversion des fils radiaux r,r', lw fil haut passant en bas et inversement. Cela veut dire que le fil circonférentiel c va s'enrouler entre deux faisceaux de fils radiaux comme on le voit plus précisément à la figure 1. On notera que la tension du fil circonférentiel est réglée pour bien positionner ce fil et pour doser le tassage des enroulements précédents. Le tissage obtenu est alors du type taffetas tel que représenté à la figure 6.

Enfin dans la zone I, la came 6 étant descendante, les doigts 9a reviennent en position basse.

On a représenté à la figure 7, le développé du mécanisme d'inversion pour vingt-cinq plaquettes numérotées de 1 à 25, faisant apparaître le profil de la rampe 6 dans les quatre zones, la position correspondante des doigts 9a et 9b, ainsi que l'emplacement de la plaque d'aiguillage 7.

Selon des variantes de réalisation, on peut obtenir des tissages dont les fils radiaux r sont inclinés de la position radiale jusqu'à la position tangentielle comme on le voit à la figure 8. Ceci est obtenu après la mise en place des fils radiaux en décalant la bague 3 de l'angle désiré, par rapport au plateau. Le ressort 20 rattrape alors la différence de longueur entre les deux positions.

Quand on superpose deux tissus identiques selon la figure 8, dont un est retourné, on a un tissu à renforcement symétrique comme le montre la variante de réalisation de la figure 9.

Par ailleurs il peut être intéressant d'obtenir un tissu à remplissage quasi constant, compensant le fait que l'espace entre deux fils radiaux adjacents augmente aussi avec le rayon. Pour cela des fils radiaux doivent être rajoutés quand l'espace devient égal par exemple à la largeur de deux fils comme on voit à la figure 10. On peut réaliser cette opération en préparant la machine avec le nombre total de fils radiaux, mais en faisant en sorte que certains d'entre eux ne soient pas tout de suite intéressés au tissage avant que le tissage n'ait atteint un certain rayon R. Pour cela un certain nombre de plaquettes 8b sont montées tout à fait en partie haute du doigt 9b comme on l'a représenté en pointillé à la figure 1. Elles échappent ainsi à l'action de l'aiguillage 7 et n'interviennent pas dans le tissage. Un mécanisme non représenté les remet en position normale quand le tissage a atteint le rayon R et la totalité des fils radiaux contribue alors au tissage.

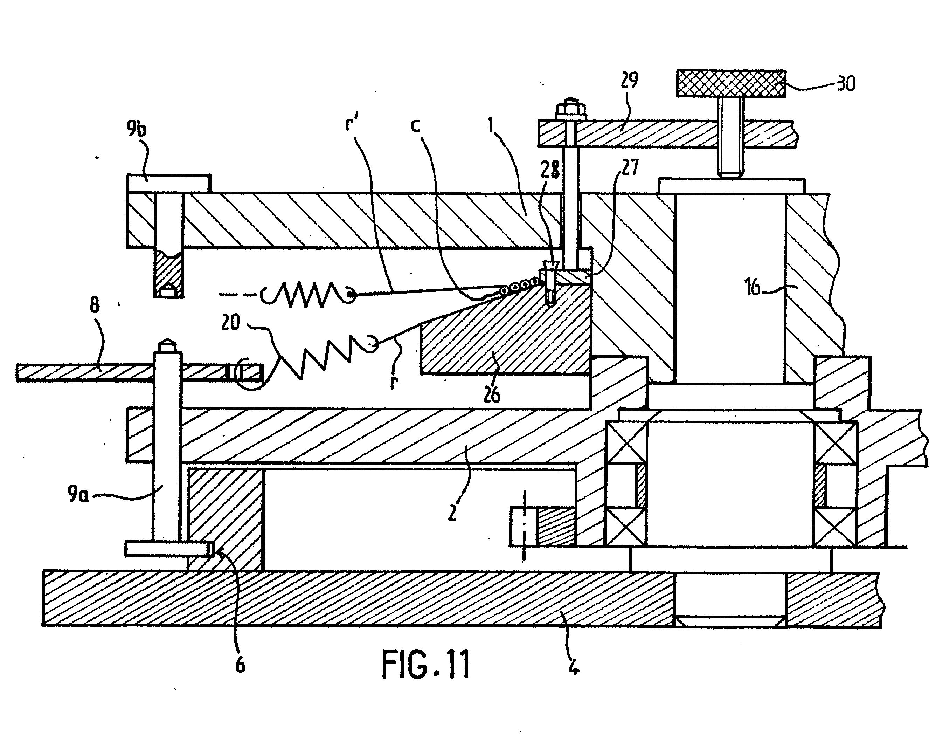

Pour obtenir un tissage en forme de cône ou en forme de dôme au lieu du tissage à plat précédemment décrit, on utilise le montage représenté à la figure 11. Au lieu de la bague 3 on dispose d'une bague spéciale 26 dont la face supérieure est profilée et présente une certaine inclinaison correspondant à l'inclinaison du cône tissé recherché. Cette bague est fixée à une couronne 27 par un jeu de vis 28, les fils r et c étant pincés entre les deux. La couronne 27 est elle-même solidaire d'un étrier 29 réglable en hauteur à l'aide du bouton molleté 30. Ledit bouton permet le réglage en hauteur de la bague 26 par rapport aux plateaux 1 et 2, au fur et à mesure du déroulement du tissage pour que celui-ci suive la pente de la bague. Pour plaquer le tissage sur cette forme, la tension des fils inférieurs r sera supérieure à celle des fils supérieurs, du fait d'une plus grande longueur donc d'une traction plus forte exercée par le ressort 20 sur les fils inférieurs.

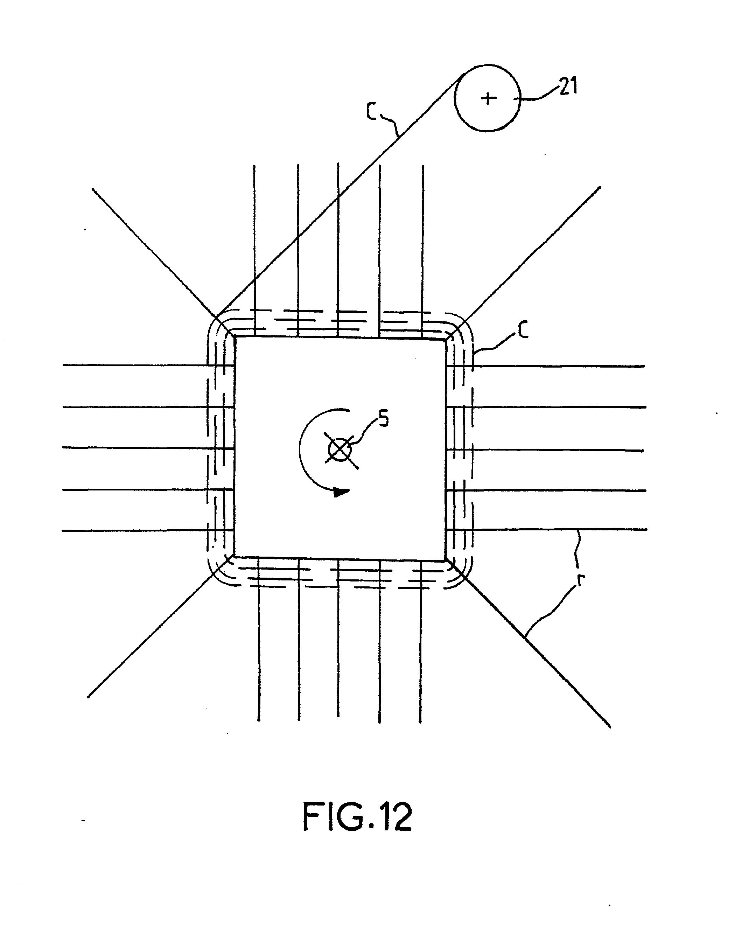

Enfin l'on comprend qu'il serait possible de réaliser des renforts tels que, par exemple, celui représenté sur la figure 12 en adaptant la machine et plus particulièrement les bagues 3a, 3b, 26, 27 à la forme du renfort voulu.

## Revendications

1.- Procédé de fabrication de renforts polaires à l'aide de fils radiaux et de fils circonférentiels continus, caractérisé en ce qu'il consiste à tendre des fils radiaux (r) entre un moyeu et alternativement l'un ou l'autre de deux flasques superposés (1,2), ménageant ainsi un espace dans lequel le circonférentiel (c) est bobiné, et en ce qu'une inversion de chaque fil radial d'un flasque à l'autre est assuré à chaque tour.

2.- Machine à tisser des renforts polaires constitués de fils radiaux et de fils circonférentiels continus pour la mise en oeuvre du procédé selon la revendication 1 caractérisé par un ensemble rotatif à deux flasques parallèles monté sur un bâti support et entraîné par un moteur, les flasques étant deux plateaux (1 et 2) délimitant entre eux une chambre de tissage (19), dont le plateau inférieur (2) porte sur sa périphérie des doigts coulissant (9a) et dont le plateau supérieur (1) porte des doigts fixes (9b), à l'aplomb des doigts coulissants, lesquels doigts occupant des positions où ils sont écartés les uns des autres dans au moins un secteur IV du bâti support (4) et des positions en contact les uns avec les autres dans au moins un autre secteur II du bâti support pour former des colonnes continues fermant la chambre de tissage, les doigts (9) servant de support à des plaquettes (8) d'accrochage de fils radiaux (r), et en ce que des moyens sont prévus sur la périphérie du bâti support pour assurer le déplacement des doigts coulissants (9a) perpendiculairement au plateau (2), et le déplacement des plaquettes (8) sur lesdits doigts en fonction de leur position par rapport au bâti support.

3.- Machine à tisser selon la revendication 2, caractérisé en ce que les moyens destinés à assurer le déplacement des doigts coulissants (9a) perpendiculairement au plateau (2), sont constitués d'une rampe (6) prévue sur le pourtour d'une couronne fixe (14) solidaire du bâti support (4), et d'une tête (15) solidaire de chaque doigt coulissant qui est engagée dans ladite rampe et commande le déplacement vertical des doigts en fonction de leur rotation par rapport audit bâti (4).

4.- Machine à tisser selon les revendications 2 et 3, caractérisée en ce que la rampe (6) est horizontale en position basse selon un secteur IV du bâti support (4), est horizontale en position haute selon un secteur II situé en face du secteur IV, est inclinée ascendante de la position basse vers la position haute selon un secteur intermédiaire III, et est inclinée descendante de la position haute vers la position basse selon un secteur intermédiaire I.

5.- Machine à tisser selon la revendication 2, caractérisée en ce qu'au moins une bague (3,26) servant à l'accrochage des fils radiaux (r) et circonférentiel (c), est prévue autour du manchon (26) du plateau supérieur (1) et tourne avec les plateaux (1 et 2).

6.- Machine à tisser selon la revendication 5, caractérisée en ce que la bague est composée de deux demi-bagues superposées (3a et 3b) fixées l'une à l'autre entre lesquelles sont pincés les fils radiaux (r) et le fil circonférentiel (c).

7.- Machine à tisser selon la revendication 5, caractérisée en ce que la bague (26) présente une face supérieure profilée ayant une certaine inclinaison correspondant à l'inclinaison de la forme tissée recherchée, et en ce qu'elle coulisse le long du manchon 16 du plateau supérieur (1).

8.- Machine à tisser selon les revendications 5 et 7, caractérisée en ce qu'une couronne (27) est fixée à la bague (26) pour le pincement des fils radiaux (r) et circonférentiels (c) et en ce que ladite couronne est manoeuvrable en hauteur par rapport au plateau (1).

9.- Machine à tisser selon la revendication 2, caractérisée en ce que les plaquettes (8) sonu munies d'un orifice grâce auquel elles sont engagées sur les doigts (9a, 9b) et en ce que leurs extrémités pénétrant à l'intérieur de la chambre de tissage (19) portent des organces de tension (20) pour l'accrochage des fils radiaux (r).

10.- Machine à tisser selon les revendications 2 et 9, caractérisée en ce que les plaquettes sont engagées alternativement sur les doigts coulissants inférieurs (9a) et sur les doigts fixes supérieurs (9b).

11.- Machine à tisser selon les revendications 2 et 4, caractérisée en ce que le moyen destiné à assurer le déplacement des plaquettes (8) sur les doigts (9) est constitué d'une plaque verticale d'aiguillage (7), s'étendant selon un secteur II du bâti support et fixé audit bâti extérieurement à la rampe (6), et coopérant avec l'extrémité extérieure desdites plaquettes (8).

12.- Machine à tisser selon la revendication 11, caractérisée en ce que la plaque (7) est constituée d'une partie inférieure (7d), dont la découpe supérieure présente deux pans légèrement inclinés vers le haut se rencontrant en un point central P, d'une partie supérieure (7a) dont la découpe inférieure présente deux pans légèrement inclinés vers le bas, et deux parties triangulaires latérales (7b, 7c) dont les côtés sont parallèles aux pans inclinés des parties (7a et 7b), ces parties étant légèrement écartées les unes des autres pour former deux échancrures (23, 24) qui partent d'une extrémité de la plaque (7) pour aboutir à l'extrémité opposée après un croisement au point central P, et forment des rainures de guidage pour les plaquettes (8).

13.- Machine à tisser selon les revendications 2 et 11, caractérisée par le fait que certaines plaquettes (8b) sont montées tout à fait en partie haute du doigts (9b) où elles échappent à l'action de l'aiguillage (7) pendant une première fraction du tissage où elles n'interviennent pas, en attendant leur remise en place normale pour intervenir pendant deuxième fraction du tissage.

14.- Renfort polaire obtenu à l'aide d'une machine à tisser selon les revendications 2 à 13.

## Patentansprüche

1. Verfahren zum Herstellen von Polverstärkungen mit Hilfe von kontinuierlichen Radial- und Umfangsfäden, dadurch gekennzeichnet, daß es aus einem Aufspannen der Radialfäden (r) zwischen einer Nabe und abwechselnd dem einen oder anderen von zwei übereinanderliegenden Flanschen (1, 2) besteht, wobei in einem so gebildeten Zwischenraum ein Umfangsfaden (c) gewickelt wird, und daß bei jeder Umdrehung für einen Übergang jedes Radialfadens vom einen auf den anderen Flansch gesorgt wird.

2. Maschine zum Weben von Polverstärkungen mit kontinuierlichen Radial- und Umfangsfäden zur Durchführung des Verfahrens nach Anspruch 1, gekennzeichnet durch eine drehbare Anordnung zweier auf einem Traggestell angebrachter und von einem Motor angetriebener paralleler Flansche in Form zweier Scheiben (1, 2), die zwischen sich einen Webraum (19) begrenzen, wobei die untere Scheibe (2) an ihrem Umfang verschiebbare Zapfen (9a), die obere Scheibe (1) senkrecht in Richtung der verschiebbaren Zapfen angebrachte Zapfen (9b) trägt, wobei die Zapfen Positionen einnehmen, in denen sie sich wenigstens in einem Sektor (IV) des Traggestells (4) im Abstand zu den anderen befinden, und Positionen, in denen sie in wenigstens einem anderen Sektor (II) des Traggestells mit den anderen in Kontakt sind, um durchgehende, den Webraum abschließende Säulen zu bilden, und wobei die Zapfen (9) als Träger für Platten (8) zum Aufhängen der Radialfäden (r) dienen, und dadurch gekennzeichnet, daß am Umfang des Traggestells Mittel vorgesehen sind, die die Verschiebung der beweglichen Zapfen (9a) senkrecht zur Scheibe (2) sowie eine Verschiebung der Platten (8) auf den Zapfen in Abhängigkeit ihrer Lage bezüglich des Traggestells ermöglichen.

3. Webmaschine nach Anspruch 2, dadurch gekennzeichnet, daß die zur Ermöglichung der Verschiebung der beweglichen Zapfen (9a) senkrecht zur Scheibe (2) vorgesehenen Mittel aus einer Rampe (6), die am äußeren Umfang eines mit dem Traggestell (4) einstückigen, fixierten Ringes (14) vorgesehen ist, und aus jeweils einem mit jedem beweglichen Zapfen einstückigen Kopf (15) bestehen, der in die Rampe eingreift und die vertikale Verschiebung der Zapfen in Abhängigkeit ihrer Rotation relativ zum Traggestell (4) steuert.

4. Webmaschine nach den Ansprüchen 2 und 3, dadurch gekennzeichnet, daß die Rampe (6) innerhalb eines Sektors (IV) des Traggestells (4) horizontal in einer unteren Position, innerhalb eines dem Sektor (IV) gegenüberliegenden Sektors (II) horizontal in einer oberen Position ist und in einem dazwischenliegenden Sektor (III) von der unteren zur oberen Position hin ansteigend sowie in einem dazwischenliegenden Sektor (I) von der oberen zur unteren Position hin abfallend geneigt ist.

5. Webmaschine nach Anspruch 2, dadurch gekennzeichnet, daß wenigstens ein Ring (3, 26) um eine Hülse (16) der oberen Scheibe (1) herum vorgesehen ist, der sich mit den Scheiben (1 und 2) mitdreht und zur Aufhängung der Radialfäden (r) und des Umfangsfadens (c) dient.

6. Webmaschine nach Anspruch 5, dadurch gekennzeichnet, daß der Ring aus zwei übereinanderliegenden, miteinander verbundenen Teilringen (3a und 3b) besteht, zwischen denen die Radialfäden (r) und der Umfangsfaden (c) eingeklemmt sind.

7. Webmaschine nach Anspruch 5, dadurch gekennzeichnet, daß der Ring (26) eine obenliegende Fläche aufweist, die im Profil eine bestimmte, der gesuchten Webform entsprechende Neigung besitzt, und daß er sich längs der Hülse (16) der oberen Scheibe (1) verschieben läßt.

8. Webmaschine nach den Ansprüchen 5 und 7, dadurch gekennzeichnet, daß an dem Ring (26) ein Kranz (27) zum Einklemmen der Radialfäden (r) und der Umfangsfäden (c) befestigt ist und daß dieser Kranz gegenüber der Scheibe (1) höhenbeweglich ist.

9. Webmaschine nach Anspruch 2, dadurch gekennzeichnet, daß die Platten (8) mit einer Öffnung versehen sind, mit deren Hilfe sie in die Zapfen (9a, 9b) eingesetzt sind, und daß ihre sich in das Innere des Webraums (19) erstreckenden Enden Federspanneinrichtungen (20) für die Aufhängung der Radialfäden (r) tragen.

10. Webmaschine nach den Ansprüchen 2 und 9, dadurch gekennzeichnet, daß die Platten (8) abwechselnd in die unteren, verschieblichen Zapfen (9a) und die oberen, fixierten Zapfen (9b) eingesetzt sind.

11. Webmaschine nach den Ansprüchen 2 und 4, dadurch gekennzeichnet, daß die zur Ermöglichung der Verschiebung der Platten (8) in den Zapfen (9) vorgesehenen Mittel aus einer vertikalen, eine Weiche bildenden Platte (7) bestehen, die sich über den Sektor (II) des Traggestells erstreckt, mit letzterem außerhalb der Rampe (6) fest verbunden ist und mit dem äußeren Ende der Platten (8) zusammenwirkt.

12. Webmaschine nach Anspruch 11, dadurch gekennzeichnet, daß die Platte (7) aus einem unteren Teil (7d), dessen oberseitiger Zuschnitt zwei geringfügig nach oben geneigte in einem zentralen Punkt (P) zusammenstoßende Flächen aufweist, aus einem oberen Teil (7a), dessen unterseitiger Zuschnitt zwei geringfügig nach unten geneigte Flächen aufweist, und aus zwei dreieckförmigen Seitenteilen (7b, 7c) besteht, deren Seiten parallel zu den geneigten Flächen der Teile (7a, 7b) verlaufen, wobei sich die Teile in geringfügigem Abstand voneinander befinden, um zwei Aussparungen (23, 24) zu bilden, die ausgehend von einem Ende der Platte (7) unter Kreuzung im zentralen Punkt (P) sich bis zum gegenüberliegenden Ende erstrecken und Führungsnuten für die Platten (8) bilden.

13. Webmaschine nach den Ansprüchen 2 und 11, dadurch gekennzeichnet, daß bestimmte Platten (8b) während eines ersten Teils des Webvorgangs, während dem sie nicht benutzt werden sollen, gänzlich am oberen Teil der Zapfen (9b) befestigt sind, wo sie nicht von der Wirkung der Weichenplatte (7) beeinflußt sind, um ihren Einsatz in der normalen Position zum Eingreifen während eines zweiten Teils des Webvorgangs abzuwarten.

14. Polverstärkung, hergestellt mit Hilfe einer Webmaschine nach einem der Ansprüche 2 bis 13.

## Claims

1. Process for the manufacture of polar reinforcements by means of continuous radial and circumferential threads, characterised in that it consists in stretching radial threads (r) between a hub and alternately one or other of two superposed flanges (1, 2), thus creating a space within which the circumferential thread (c) is wound, and that inversion of each radial thread from one flange to the other is effected at each revolution.

2. Machine for weaving polar reinforcements consisting of continuous radial and circumferential threads for the implementation of the process according to claim 1, characterised by a rotating assembly with two parallel flanges which is mounted on a support frame and driven by a motor, the flanges being two plates (1 and 2) defining between them a weaving chamber (19), of which the lower plate (2) carries on its periphery sliding fingers (9a) and the upper plate (1) carries fixed fingers (9b), in line vertically with the sliding fingers, which fingers occupy positions in which they are distanced from one another in at least one sector IV of the support frame (4) and positions in contact with one another in at least one other sector IV of the support frame in order to form continuous columns closing the weaving chamber, the fingers (9) serving as a support for attachment plates (8) for radial threads (r), and in that means are provided on the periphery of the support frame to effect the movement of the sliding fingers (9a) perpendicularly to the plate (2), and the movement of the attachment plates (8) on the said fingers as a function of their position with respect to the support frame.

3. Weaving machine according to claim 2, characterised in that the means intended to effect the movement of the sliding fingers (9a) perpendicularly to the plate (2) consist of a ramp (6) provided on the circumference of a fixed crown (14) rigidly connected to the support frame (4), and of a head (15) which is rigidly connected to each sliding finger and is engaged in the said ramp and controls the vertical movement of the fingers as a function of their rotation with respect to the said frame (4).

4. Weaving machine according to claims 2 and 3, characterised in that the ramp (6) is horizontal in the low position along a sector IV of the support frame (4), is horizontal in the high position along a sector II situated opposite the sector IV, is inclined upwards from the low position towards the high position along an intermediate sector III, and is inclined downwards from the high position towards the low position along an intermediate sector I.

5. Weaving machine according to claim 2, characterised in that at least one ring (3, 26) serving to attach the radial threads (r) and circumferential threads (c) is provided round the bush (16) of the upper plate (1) and rotates with the plates (1 and 2).

6. Weaving machine according to claim 5, characterised in that the ring is composed of two superposed half-rings (3a and 3b) fixed to each other and between which the radial threads (r) and the circumferential thread (c) are clamped.

7. Weaving machine according to claim 5, characterised in that the ring (26) has a profiled upper face having a certain inclination corresponding to the inclination of the desired woven shape, and that it slides along the bush 16 of the upper plate (1).

8. Weaving machine according to claims 5 and 7, characterised in that a crown (27) is fixed to the ring (26) for the clamping of the radial threads (r) and circumferential threads (c) and that the said crown is adjustable in height with respect to the plate (1).

9. Weaving machine according to claim 2, characterised in that the attachment plates (8) are provided with an opening by means of which they are engaged on the fingers (9a, 9b) and that their ends penetrating inside the weaving chamber (19) carry tensioning members (20) for the attachment of the radial threads (r).

10. Weaving machine according to claims 2 and 9, characterised in that the attachment plates are engaged alternately on the lower sliding fingers (9a) and on the upper fixed fingers (9b).

11. Weaving machine according to claims 2 and 4, characterised in that the means intended to effect the movement of the attachment plates (8) on the fingers (9) consists of a vertical switching plate (7), extending along a sector II of the support frame and fixed to the said frame externally to the ramp (6), and co-operating with the outer end of the said attachment plates (8).

12. Weaving machine according to claim 11, characterised in that the plate (7) consists of a lower part (7d), the upper cut-off of which has two portions slightly inclined in an upward direction and meeting each other at a central point P, an upper part (7a), the lower cut-off of which has two portions slightly inclined in a downward direction, and two lateral triangular parts (7b, 7c) the sides of which are parallel to the inclined portions of the parts (7a and 7b), these parts being slightly spaced from one another to form two curved cuts (23, 24) which extend from one end of the plate (7) to finish at the opposite end after crossing at the central point P, and form guide grooves for the attachment plates (8).

13. Weaving machine according to claims 2 and 11, characterised in that some of the attachment plates (8b) are mounted right in the upper part of the fingers (9b) where they escape the action of the switching means (7) during a first fraction of the weaving where they do not intervene, while awaiting their return to the normal position to intervene during a second fraction of the weaving.

14. Polar reinforcement obtained by means of a weaving machine according to claims 2 to 13.

FIG.1

FIG. 2

EP 0 271 409 B1

FIG.3

FIG.4

FIG. 5

EP 0 271 409 B1

FIG.7

EP 0 271 409 B1

FIG. 8

FIG. 9

FIG.6

FIG.10

FIG.11

EP 0 271 409 B1

FIG.12